# EUROPÄISCHE PATENTANMELDUNG

(11) **EP 0 953 476 A1**
(43) Veröffentlichungstag der Anmeldung: **03.11.1999**
(21) Anmeldenummer: 98122453.8
(22) Anmeldetag: 26.11.1998
(51) Int. Cl.: B60N 2/48

(54) **Anordnung zur stufenlosen Verstellung einer Kopfstütze an einer Sitzlehne eines Sitzes für ein Kraftfahrzeug**

(30) Priorität: 30.04.1998 DE 19819502
(71) Anmelder: R. SCHMIDT GMBH, 57368 Lennestadt (DE)
(72) Erfinder: Strunk, Harald, 58840 Plettenberg (DE); Heuel, Gerhard, 57482 Wenden (DE)
(74) Vertreter: Köchling, Conrad, Dipl.-Ing.

(57) **Zusammenfassung**

Um eine Anordnung zur stufenlosen Verstellung einer Kopfstütze an einer Sitzlehne eines Sitzes für Kraftfahrzeuge, bestehend aus mindestens einer an der Sitzlehne befestigten Führungsstange und einer auf dieser verschieblich angeordneten Kopfstütze, zu schaffen, die bei Extrembelastungen, also beispielsweise im Falle eines Unfalles, die unverschiebliche Anordnung der Kopfstütze gewährleistet, im Normalfall aber eine einfache stufenlose Verstellung der Kopfstütze ermöglicht, wird vorgeschlagen, daß an der Kopfstütze (1) ein von der Führungsstange (2) durchgriffener Stangenträger (3) gehaltert ist, der aus einem hülsenartigen weichelastischen Puffer (4) besteht, der die Führungsstange (2) mit radialem Spiel umgibt, sowie in den Puffer (4) eingebetteten Gleitscheiben (5, 6), die von der Führungsstange (2) annähernd spielfrei durchgriffen sind, so daß die Kopfstütze (1) mit dem Stangenträger (3) auf der Führungsstange (2) verschieblich ist und bei auf die Kopfstütze (1) einwirkenden Querkräften (quer zur Führungsstange) der Puffer (4) gegen die Führungsstange (2) bzw. die Führungsstange (2) gegen den Puffer (4) angedrückt und die Kopfstütze (1) samt Stangenträger (3) durch sich zwischen Puffer (4) und Führungsstange (2) aufbauende Reibkräfte unverschieblich gehalten ist.

## Beschreibung

Die Erfindung betrifft eine Anordnung zur stufenlosen Verstellung einer Kopfstütze an einer Sitzlehne eines Sitzes für Kraftfahrzeuge, bestehend aus mindestens einer an der Sitzlehne befestigten Führungsstange und einer auf dieser verschieblich angeordneten Kopfstütze.

Im Stand der Technik sind stufenlose Verstellmöglichkeiten von Kopfstützen bekannt. Gleichfalls sind stufenweise Verstellmöglichkeiten bekannt.

Der Erfindung liegt die Aufgabe zugrunde, eine stufenlose Verstellmoglichkeit zu schaffen, die bei Extrembelastungen, also beispielsweise im Falle eines Unfalles, die unverschiebliche Anordnung der Kopfstütze gewährleistet, im Normalfall aber eine einfache stufenlose Verstellung der Kopfstütze ermöglicht.

Zur Lösung dieser Aufgabe wird vorgeschlagen, daß an der Kopfstütze ein von der Führungsstange durchgriffener Stangenträger gehaltert ist, der aus einem hülsenartigen weichelastischen Puffer besteht, der die Führungsstange mit radialem Spiel umgibt, sowie in den Puffer eingebetteten Gleitscheiben, die von der Führungsstange annähernd spielfrei durchgriffen sind, so daß die Kopfstütze mit dem Stangenträger auf der Führungsstange verschieblich ist und bei auf die Kopfstütze einwirkenden Querkräften (quer zur Führungsstange) der Puffer gegen die Führungsstange bzw. die Führungsstange gegen den Puffer angedrückt und die Kopfstütze samt Stangenträger durch sich zwischen Puffer und Führungsstange aufbauende Reibkräfte unverschieblich gehalten ist.

Obwohl nur von mindestens einer Führungsstange und entsprechenden Kopfstützenausstattung die Rede ist, wird selbstverständlich davon ausgegangen, daß üblicherweise jede Kopfstütze mit zwei zueinander parallelen Führungsstangen und entsprechenden Aufnahmeeinrichtungen versehen ist.

Erfindungsgemäß ist an der Kopfstütze ein Stangenträger gehaltert, der aus einem weichelastischen Puffer besteht und der Gleitscheiben haltert. Im Normalzustand ist die Kopfstütze über den Stangenträger und die Gleitscheiben auf der Führungsstange verschieblich gelagert, so daß eine leichtgangige stufenlose Verstellmöglichkeit gegeben ist. Im Crashfall, wenn also Querkräfte auf die Kopfstütze einwirken, wird die Kopfstütze mit dem Stangenträger relativ zur Führungsstange quer verschoben, so daß der Puffer mindestens einseitig fest gegen die Führungsstange angepreßt wird. Hierdurch bauen sich hohe Reibungskräfte zwischen der Oberfläche des Puffers und der Oberfläche der Führungsstange auf, was dazu führt, daß ein unbeabsichtiges Weiterrutschen oder Verstellen der Kopfstütze in diesem Zustand nicht möglich ist. Erst dann, wenn die Querkraftbelastung nachläßt, wird die Kopfstütze relativ zur Führungsstange durch die Entlastung des Puffers wieder entsprechend ausgerichtet, so daß lediglich die Gleitscheiben auf der Führungsstange gleiten und die Verstellmöglichkeit der Kopfstütze wieder gegeben ist.

Bevorzugt ist zudem vorgesehen, daß der weichelastische Puffer ein Elastomer Puffer ist.

Um ein entsprechendes äußeres radiales Widerlager für den Puffer zu bilden, ist bevorzugt vorgesehen, daß der weichelastische Puffer in ein formstabiles Aufnahmeteil der Kopfstütze eingesetzt ist.

Desweiteren ist bevorzugt vorgesehen, daß der Puffer nahe seiner Enden eingebettete Gleitscheiben aufweist, die bei von Querkräften unbelastetem Puffer über dessen Innenwandung vorragen.

Um ein unbeabsichtigtes vollständiges Abschieben der Kopfstütze von der Führungsstange zu vermeiden, ist vorgesehen, daß die Führungsstange an ihrem (oberen) freien Ende eine Fangkerbe aufweist und die obere Gleitscheibe Rastnasen oder eine umlaufende Rastrippe aufweist, die an der Führungsstange unter materialeigener Vorspannung oder unter Vorspannung des diese außen umgebenden Materials des Puffers anliegt und bei maximaler Auszugsstellung der Kopfstütze in die Fangkerbe einfallen bzw. einfällt.

Ein Ausführungsbeispiel der Erfindung ist in der Zeichnung dargestellt und im folgenden näher beschrieben.

### Es zeigt:

Figur 1 wesentliche Bestandteile der Anordnung in explosionsartiger Darstellung;
Figur 2 eine Einzelheit im Schnitt gesehen;
Figur 3 die Einzelheit im Schnitt III-III gesehen (in explosionsartiger Darstellung);
Figur 4 die Einzelheit im Schnitt IV-IV der Figur 2 gesehen.

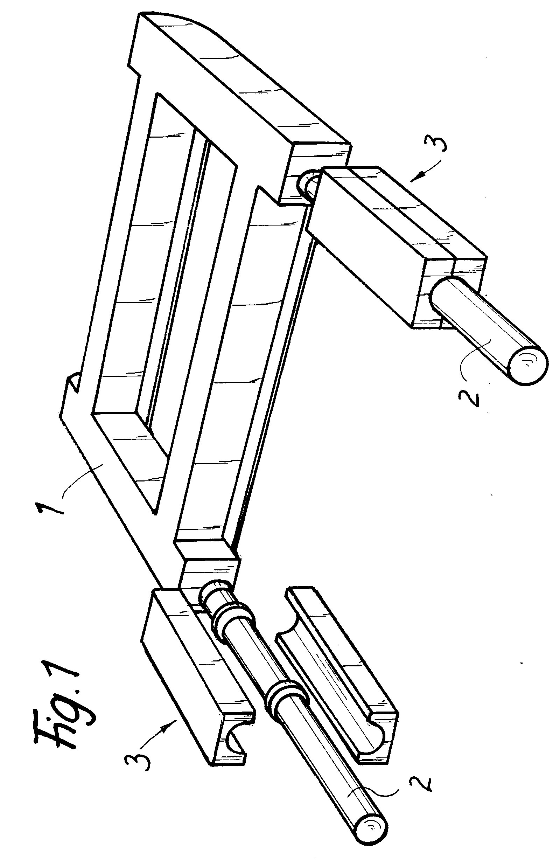

In der Zeichnung ist eine Anordnung zur stufenlosen Verstellung einer Kopfstütze 1 an einer Sitzlehne eines Sitzes für Kraftfahrzeuge gezeigt. Sie besteht im wesentlichen aus zwei an der Sitzlehne befestigten Führungsstangen 2 und der auf diesen verschieblich angeordneten Kopfstütze 1. Im Ausführungsbeispiel gemäß Figur 1 ist nur ein Innenteil der Kopfstütze 1 gezeigt, jedoch nicht die Kopfstütze selbst mit Polsterung und dergleichen.

An der Kopfstütze 1 ist ein von der Führungsstange 2 durchgriffener Stangenträger 3 gehaltert, der aus einem hülsenartigen, weichelastischen Puffer 4 besteht, der die Führungsstange 2 mit radialem Spiel (also berührungslos) umgibt, sowie in den Puffer 4 eingebetteten Gleitscheiben 5, 6, die von der Führungsstange spielfrei durchgriffen sind, so daß praktisch eine spielfreie Führung zum Verstellen der Kopfstütze 1 entlang der Führungsstange 2 gebildet ist. Sofern auf die Kopfstütze 1 Querkräfte einwirken, also Kräfte, die quer zur Führungsstange 2 gerichtet sind, was beispielsweise in einem Crashfall passieren kann, so wird die Führungsstange 2 gegen den Puffer angedrückt bzw. der Puffer 4 gegen die Führungsstange 2 angedrückt. Hierdurch baut sich ein hohes Reibmoment zwischen der Anlagefläche des Puffers 4 und der Führungsstange 2 auf, wodurch ein Weiterrutschen der Kopfstütze entlang der Führungsstange unterbunden ist.

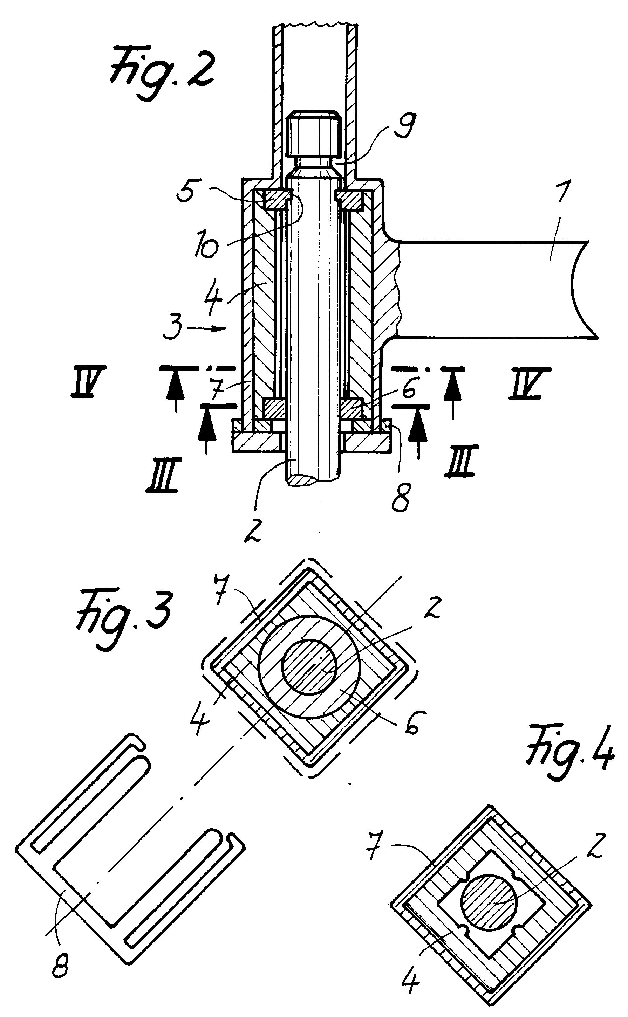

In diesem Falle werden die Gleitscheiben 5, 6 in das diese äußerlich umgebende Material des Puffers 4 zurückgedrängt, so daß eine große Berührungsfläche zwischen dem Puffer 4 und der Führungsstange 2 gebildet ist. Der Puffer besteht vorzugsweise aus Elastomermaterial, welches hohe Reibmomente an seiner Oberfläche aufbauen kann. Wie insbesondere aus Figur 2 ersichtlich, kann der weichelastische Puffer 4 in ein formstabiles Aufnahmeteil 7 der Kopfstütze 1 eingesetzt sein, so daß der Puffer außenseitig und gegebenenfalls auch axial formstabil gestützt ist. Zur Befestigung des Puffers 4 in dem Aufnahmeteil 7 kann eine Klemmvorrichtung 8 vorgesehen sein, durch die der axial in die Aufnahme eingesteckte Puffer 4 unverlierbar in der Aufnahme 7 gehalten ist. Die Gleitscheiben 5, 6 sind vorzugsweise nahe der Enden des Puffers 4 in diesen eingebettet, wobei die Gleitscheiben so angeordnet sind, daß sie bei von Querkräften unbelastetem Puffer 4 über dessen Innenwandung vorragen, wie insbesondere aus Figur 2 ersichtlich ist.

Die Führungsstange 2 weist an ihrem oberen freien Ende eine Fangkerbe 9 auf. Die obere Gleitscheibe 5 weist Rastnasen oder eine umlaufende Rastrippe 10 auf, die an der Führungsstange 2 unter materialeigener Vorspannung oder auch unter Vorspannung des diese außen umgebenden Materials des Puffers 4 anliegt und bei maximaler Auszugsstellung der Kopfstütze 1 in dem Bereich der Fangkerbe 9 gelangt und in diese einrastet. Die eine Flanke der Kerbe ist steil ausgebildet, so daß ein Abziehen über diese Kerbe hinaus nicht möglich ist, während die andere Flanke der Kerbe relativ flachwinklig ausgebildet ist, so daß die Rastrippe 10 aus der Kerbe 9 wieder auf den Führungsbereich der Führungsstange 2 aufgeführt werden kann.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Anordnung zur stufenlosen Verstellung einer Kopfstütze an einer Sitzlehne eines Sitzes für Kraftfahrzeuge, bestehend aus mindestens einer an der Sitzlehne befestigten Führungsstange und einer auf dieser verschieblich angeordneten Kopfstütze, **dadurch gekenneichnet**, daß an der Kopfstütze (1) ein von der Führungsstange (2) durchgriffener Stangenträger (3) gehaltert ist, der aus einem hülsenartigen weichelastischen Puffer (4) besteht oder einen solchen aufweist, der die Führungsstange (2) mit radialem Spiel umgibt, sowie in den Puffer (4) eingebetteten Gleitmitteln, insbesondere Gleitscheiben (5, 6), die von der Führungsstange (2) annähernd spielfrei durchgriffen sind, so daß die Kopfstütze (1) mit dem Stangenträger (3) auf der Führungsstange (2) verschieblich ist und bei auf die Kopfstütze (1) einwirkenden Querkräften (quer zur Führungsstange) der Puffer (4) gegen die Führungsstange (2) bzw. die Führungsstange (2) gegen den Puffer (4) angedrückt und die Kopfstütze (1) samt Stangenträger (3) durch sich zwischen Puffer (4) und Führungsstange (2) aufbauende Reibkräfte unverschieblich gehalten ist.

2. Anordnung nach Anspruch 1, **dadurch gekennzeichnet**, daß der weichelastische Puffer (4) ein Elastomer Puffer ist.

3. Anordnung nach Anspruch 1 oder 2, **dadurch** **gekennzeichnet**, daß der weichelastische Puffer (4) in ein formstabiles Aufnahmeteil (7) der Kopfstütze (1) eingesetzt ist.

4. Anordnung nach einem der Ansprüche 1 bis 3, **dadurch gekennzeichnet**, daß der Puffer (4) nahe seiner Enden eingebettete Gleitscheiben (5,6) aufweist, die bei von Querkräften unbelastetem Puffer (4) über dessen Innenwandung vorragen.

5. Anordnung nach einem der Ansprüche 1 bis 4, **dadurch gekennzeichnet**, daß die Führungsstange (2) an ihrem (oberen) freien Ende eine Fangkerbe (9) aufweist und die obere Gleitscheibe (5) Rastnasen oder eine umlaufende Rastrippe (10) aufweist, die an der Führungsstange (2) unter materialeigener Vorspannung oder unter Vorspannung des diese außen umgebenden Materials des Puffers (4) anliegt und bei maximaler Auszugsstellung der Kopfstütze in die Fangkerbe (9) einfallen bzw. einfällt.
